Europäisches Patentamt

European Patent Office

Office européen des brevets

(19)

(11)  EP 1 010 089 B1

(12)  EUROPEAN PATENT SPECIFICATION

(45) Date of publication and mention
of the grant of the patent:
**08.01.2003  Bulletin 2003/02**

(51) Int Cl.⁷: **G06F 13/38**, H04B 3/54,
E05F 15/10, H02P 7/29

(21) Application number: **98902967.3**

(22) Date of filing: **18.02.1998**

(86) International application number:
**PCT/DK98/00065**

(87) International publication number:
**WO 98/037493 (27.08.1998 Gazette 1998/34)**

(54) **A MICROPROCESSOR-CONTROLLED DRIVE UNIT FOR ELECTRICALLY OPERATED DEVICES**

MIKROPROZESSORKONTROLLIERTE ANTRIEBSEINHEIT FÜR ELEKTRISCH BETRIEBENE VORRICHTUNG

MECANISME D'ENTRAINEMENT COMMANDE PAR UN MICROPROCESSEUR POUR DISPOSITIFS A COMMANDE ELECTRIQUE

(84) Designated Contracting States:
**AT BE CH DE DK ES FI FR GB GR IE IT LI LU MC NL PT SE**
Designated Extension States:
**AL LT LV MK RO SI**

(30) Priority: **20.02.1997  DK 17919**

(43) Date of publication of application:
**21.06.2000  Bulletin 2000/25**

(73) Proprietor: **VKR Holding A/S**
**2860 Soeborg (DK)**

(72) Inventor: **DARUM, Jesper**
**DK-2605 Br ndby (DK)**

(74) Representative: **Carlsson, Eva et al**
**Internationalt Patent-Bureau,**
**23 Hoje Taastrup Boulevard**
**2630 Taastrup (DK)**

(56) References cited:
**EP-A- 0 650 267**          **EP-A- 0 735 665**
**DE-A- 4 234 501**          **GB-A- 2 189 906**
**GB-A- 2 202 967**

## Description

The present invention relates to a drive unit for electrically operated devices such as doors, windows, screening devices and the like, comprising a drive unit casing designed for stationary mounting and containing a motion transfer member designed for connection with the operated device and in engagement with a reversible drive motor with an associated motor control circuit, which drive unit is designed as a program-controlled unit, the motor control circuit comprising a microprocessor with associated reprogrammable memory containing operating parameters for the drive motor.

Such microprocessor controlled drive units are known in different designs, inter alia from US patents nos 5,285,137 and 5,371,447 and the EP patent applications nos 0 493 322 and 0 618 338 and have been developed for the purpose of ensuring a reliable electrical operation in particular of windows which are difficult to access for manual operation.

In a curtain drive unit known from US patent no. 5,371,447, an EPROM unit is used in connection with the microprocessor for storing an operation program which comprises predetermined data for curtain positions and movement times.

In a door control system known from GB-A-2 202 967 the motor is controlled by a microcomputer according to a program contained in a plug-in EPROM. The EPROM contains inter alia a pre-programmed door motion profile.

In a window drive unit known from US patent no. 5,282,137, a control program is stored in an internal ROM in the microprocessor which via an interface unit can be controlled partly by remote control and partly by signals from different external sensors such as a rain sensor.

Likewise, in a curtain drive unit known from EP patent application no. 0 493 322, an EPROM is connected to a microprocessor for storing information on the movement direction activated by a prior operation.

In a control circuit known from EP patent application no. 0 618 338 and which is common for a number of drive units which may comprise lock or bolt disengagement drive units as well as opening/closing drive units, an internal memory in a microprocessor is used for storing identification information about the types of the connected drive units together with data obtained by an initiating procedure for determination of the duration of a complete opening or closing movement.

EP-A-650 267 discloses a method for transmitting data in and out of a semiconductor memory via the memory's terminals. The main aim being to reduce the number of terminals so as to facilitate miniaturization.

It is therefore the object of the invention to provide a drive unit of the stated kind which is in particular distinguished in that it can easily be adapted for use in different applications, e.g. different window types or adjusted according to occuring load variations, e.g. wind loads, which can in particular influence the function of drive units for large window frames or production tolerances in the mechanical parts of the drive unit just as it can be readjusted even after mounting.

These and other advantages are according to the invention obtained by a drive unit of the stated kind which is characterized in that the memory can be programmed and reprogrammed from the outside via the current supply conductors to the drive unit by means of an external programming device via an interface unit which by connection to the current supply conductors brings the microprocessor into a programming condition deviating from a normal operating condition and in which data can be exchanged between the microprocessor and the external programming unit.

Advantageous embodiments for such a drive unit are stated in the subclaims.

In the following, the invention is explained more in detail with reference to the schematical drawing where

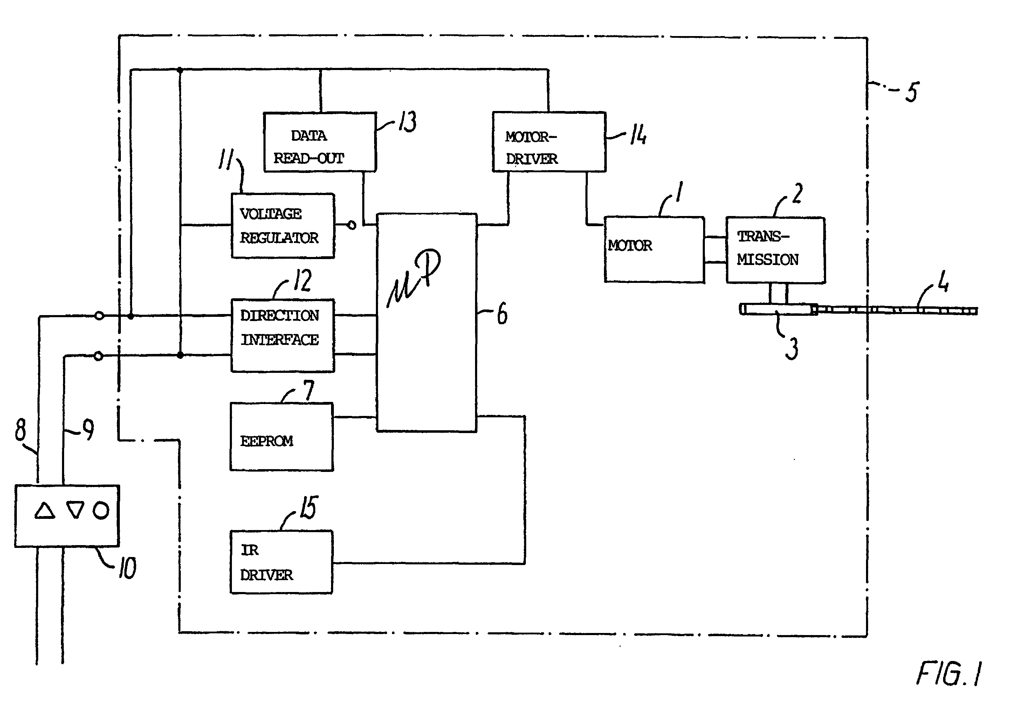

Fig. 1 is a block diagram showing the main components of a window drive unit according to the invention,

Fig. 2 shows the connection of the drive unit to an external programming device,

Fig. 3 shows the design of a circuit in the drive unit for the use in the exchange of data between the drive unit and the external programming device, and

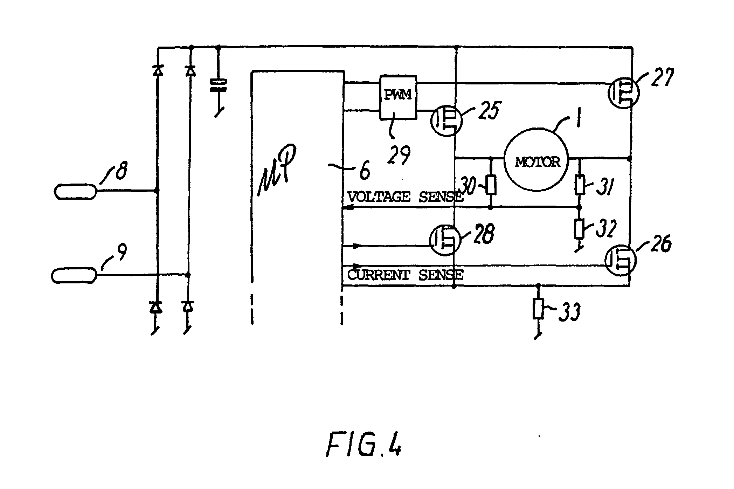

Fig. 4 shows the design of a circuit for limitation of the current consumption of a further development of the drive unit.

The drive unit according to the invention is in the embodiment shown on the drawing designed as an self-contained, autonomous unit to be used e.g. in connection with a chain drive unit of the kind which is well-known for opening and closing different window types, in particular roof windows.

The drive unit comprises as main components a reversible electrical drive motor 1 which via a built-in transmission 2 is connected to a drive member for the adjustement member of the drive unit, e.g. a chain wheel 3 which is in engagement with a chain 4 which at one end is connected to a window frame whereas the motor 1, the transmission 2, and the chain wheel 3 together with the chain part 4 in engagement therewith and the electronic components in the drive unit are built into a casing 5 which is connected with the frame construction of the window.

For the control of all operating functions, the drive unit contains a microprocessor 6 with control programs stored in an internal ROM. To the microprocessor 6 is connected a reprogrammable EEPROM 7 where the operating parameters of the function of the drive unit in the actual use is stored. The current supply to the drive unit is effected via two current supply conductors 8 and 9 which can be connected to an operation keyboard 10 and in the drive unit are connected to a voltage regulator 11 providing a supply voltage $V_{cc}$ to the microprocessor 6 and other electronic components in the drive unit and furthermore via a direction interface circuit 12 and a data read-out circuit 13 is connected to the microprocessor 6.

The current supply conductors 8 and 9 are furthermore connected to a motor driver circuit 14 controlled by the microprocessor 6 and controlling connection and disconnection together with the rotating direction of the motor 1.

The microprocessor 6 can moreover be connected with an IR receiver 15 for the use in remote control of the drive unit from an IR remote control unit of a kind known per se.

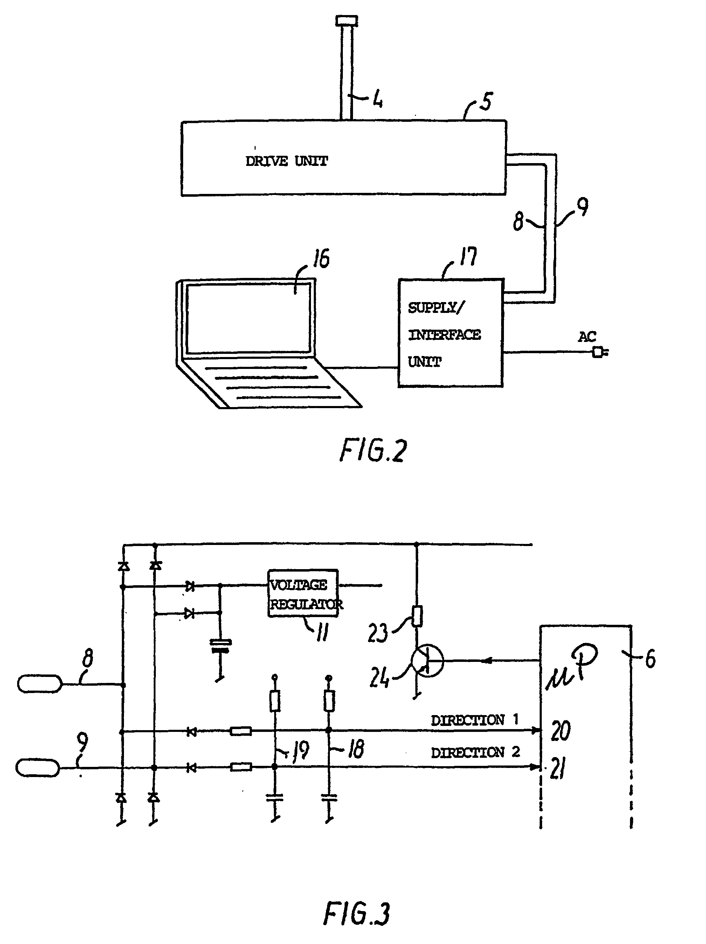

According to the invention, the drive unit is designed for exchanging data with an external programming unit which as shown in Fig. 2 can be a portable PC 16 which via an interface unit 17 is connected to the current supply conductors 8 and 9 of the drive unit which in the operating condition is supplied with a DC voltage, e.g. a full-wave rectified supply voltage, the polarity of which determines the rotating direction of the reversible motor 1 of the drive unit.

In the programming arrangement shown in Fig. 2, the interface unit 17 is adapted for switching the polarity of the current supply conductors 8 and 9 at a frequency which is considerably higher than the mains frequency, e.g. 10 kHz, whereby the drive unit as explained in the following is brought into a programming or data exchanging condition deviating from the normal operating condition.

In the drive unit, the direction interface circuit 12 connected to the current supply conductors 8 and 9 contains as shown in Fig. 3 two RC couplings 18 and 19 each in connection with one of the current supply conductors 8 and 9. The direction interface circuit 12 emits to two inputs 20 and 21 on the microprocessor 6 direction control signals which in the normal operating condition are unambiguously determined by the polarity of the current supply conductors 8 and 9 and determine the rotating direction of the motor 1.

By way of example, if the current supply conductor 8 is positive compared to the current supply conductor 9, the capacitor in the RC coupling 18 is charged through the associated resistance, whereas the capacitor in the RC coupling 19 is discharged through the associated resistance whereby a direction control signal with the logical value "1" is emitted to the input 20, whereas a direction control signal with logical value "0" is emitted to the input 21. If, on the other hand, the current supply conductor 9 is positive compared to the current supply conductor 8, the direction control signals on the inputs 20 and 21 assume logical values "0" and "1", respectively.

By the switching of the polarity of the current supply conductors 8 and 9 at a relatively high frequency which is effected in the programming and data exchange condition, the capacitors in both RC couplings 18 and 19 are discharged such that the signals emitted to the inputs 20 and 21 of the microprocessor both assume a low level corresponding to logical "0" whereby the microprocessor is brought into the programming or data exchange condition.

Subsequent to the completion of the programming or data exhange and after disconnecting the programming and interface units 16 and 17 again, the microprocessor can only be brought back to normal operating condition by a separate reset operation, e.g. by giving an end command on the portable PC 16.

In the programming or data exchange condition, there can by entering suitable commands on the portable PC 16 either be transferred data representing predetermined parameter values from this to the microprocessor 6 and the EEPROM 7 connected thereto or there can be read out data stored in the EEPROM 7 or the microprocessor 6 to the portable PC 16.

The data transfer from the portable PC 16 to the microprocessor 6 can e.g. be effected in that the commands entered into the portable PC 16 in the interface unit 17 are converted into bit patterns transferred to the drive unit by switching the polarity of the current supply conductors 8 and 9 at a suitably low frequency corresponding to a bit rate appropriate for reception and decoding of the information.

By way of example, data can be transferred to an interface unit 17 by a standard NRZ bit coding from the serial port on the portable PC 16. A transmission rate of 300 baud corresponding to a maximum pulse rate of 150 Hz is thus obtained. The transferred bit patterns can thus be decoded by the RC couplings 18 and 19 and from there be delivered to the inputs 20 and 21 of the microprocessor 6 instead of the direction control signals supplied in the normal operating condition.

In the microprocessor 6, a terminal 22 is connected to the EEPROM 7.

The transmission protocol for transfer of parameter information from the portable PC 16 to the microprocessor 6 can be organized in frames or pages with each 8 bytes consisting of a serially transferred bit string of 8 bits. At the beginning of the transmission, a byte is first transferred in the first frame with an instruction or command about started transmission followed by a byte identifying the parameter which is subsequently read and serves for addressing when writing in the EEPROM 7 and one or more control bytes. After a pause corresponding to the remaining duration of the first frame or page, the actual parameter information is transferred in the 8 bytes in the following frame upon which control frame ending information is transferred in the next frame. The transferred parameter data are buffered in a RAM in the microprocessor before being stored in EEPROM 7 which e.g. can have a capacity of 16 frames or pages of 8 bytes or a total of 128 bytes.

Programming and reprogramming of the relevant operating parameters can thus be effected in connection with the production of drive units acording to the invention and at later times, e.g. in connection with the end mounting. In connection with the production, the programming can typically comprise serial numbers and calibration constants together with certain function parameters whereas in the end mounting it will typically be programming of operating parameters which can vary in dependence of the type of window, for which the drive unit is to be used and the working loads to which the drive unit can be expected to be subjected, and which typically can comprise maximum pull, speed or power or maximum opening degree for the window.

As mentioned in the above, a data read-out from the drive unit to the portable PC 16 can also be effected in the programming or data exchange condition, e.g. with the object of verifying the programmed operating parameters or reading out data which are logged in the drive unit.

The data read-out is effected from the microprocessor 6 by connecting and disconnecting the load resistance 23 shown in Fig. 3 by means of a transistor switch 24 and in accordance with the bit pattern required to be read out. The thus caused changes in the current drawn by the drive unit from the current supply conductors 8 and 9 can in the interface unit 17 be registered and converted to a digital signal which after a suitable level conversion can be delivered to the serial port on the portable PC 16.

The data read-out is effected by transfer of an instruction or command from the portable PC.

During normal operation, the microprocessor 6 controls the rotating direction for the motor 1 which is a DC motor, by activation of one of the two pairs of the field effect transistors 25, 26 or 27, 28 in the driver circuit 14, whereas the current and voltage to the motor are controlled by pulse width modulation in a PWM modulator 29 connected between the microprocessor 6 and the field effect transistors 25, 26 or 27, 28. The speed of the DC motor 1 determined by the motor voltage is monitored by the microprocessor by measurements of the motor voltage by means of a resistor network with resistances 30, 31, and 32 whereas the torque of the motor is monitored by voltage measurement via a current sensor resistance 33. In order to maintain the motor at a usually constant speed independently of the torque, the voltage measured by means of the resistor network 29-31 is compensated for the voltage drop over the internal resistance of the motor calculated by the measured motor current. The current drawn from the current supply conductors 8 and 9 can thus be calculated by multiplication of the measured motor current by the duty cycle of the pulse width modulated signal.

The program control in the microprocessor uses an adjustment algorithm which primarily tries to maintain a constant motor speed even though the motor is subjected to varying loads but such that a stored maximum current consumption is not exceeded.

As long as the motor current or the current consumption have not reached the programmed maximum values, the following applies for the voltage $V_m$ over the motor terminals

$$V_m = V_e + k * R_m * I_m,$$

where $V_e$ is the EMF of the motor, $I_m$ is the motor current, $R_m$ is the internal resistance of the motor and k a constant which, for the stability, is smaller than 1.

When the current consumption reaches the programmed maximum, the motor voltage is reduced by control of the pulse width modulated signal, such that the motor current decreases to the programmed maximum whereby the motor speed is reduced.

**Claims**

1. A drive unit for electrically operated devices such as doors, windows, screening devices and the like, comprising a drive unit casing (5) designed for stationary mounting and containing a motion transfer member (4) designed for connection with the operated device and in engagement with a reversible drive motor (1) with an associated motor control circuit, which drive unit is designed as a program-controlled unit, the motor control circuit comprising a microprocessor (6) with associated reprogrammable memory (7) containing operating parameters for the drive motor (1), **characterized in that** the memory (7) can be programmed and reprogrammed from the outside via the current supply conductors (8, 9) to the drive unit by means of an external programming device (16) via an interface unit (17) which by connection to the current supply conductors (8, 9) brings the microprocessor into a programming condition deviating from a normal operating condition and in which data can be exchanged between the microprocessor (6) and the external programming unit (16).

2. A drive unit according to claim 1 where the rotating direction of the drive motor (1) in the normal operating condition is defined by the polarity of a DC voltage on the current supply conductors (8, 9), **characterized in that** the programming condition comprises switching the polarity of the current supply conductors (8, 9) at a frequency which is considerably higher than the mains frequency.

3. A drive unit according to claim 1 or 2, **characterized in that** the microprocessor (6) is adapted for logging of data during operation of the drive unit and, in said programming condition, for reading out such data and/or stored operating parameters from the reprogrammable memory (7) by microprocessor controlled connection and disconnection of a load resistor (23) connected to the current supply conductors (8, 9).

4. A drive unit according to claim 1, 2, or 3, **characterized in that** the stored operating parameters comprise a predetermined maximum supply current for the drive motor (1) of the unit, that means for monitoring voltage and current to the motor are connected to the microprocessor (6), and that the microprocessor (6) is programmed to calculate the current maximum current on the basis of the measured motor current and, when exceeding the stored maximum supply current, to initiate an adjustment of the motor voltage for reduction of the supply current to the stored maximum value.

5. A drive unit according to claim 4, **characterized in that** the current and voltage to the motor (1) are controlled by pulse width modulation, and that the current supply current is calculated by multiplication of the measured motor current by the duty cycle of the pulse width modulated signal.

6. A drive unit according to claim 5, **characterized in that** the adjustment of the motor voltage is effected by control of the pulse width modulated signal.

**Patentansprüche**

1. Antriebseinheit für elektrisch betätigte Vorrichtungen wie Türen, Fenster, Abschirmvorrichtungen und dergleichen, umfassend ein für stationären Einbau ausgebildetes Antriebseinheit-Gehäuse (5) enthaltend ein zum Anschluss an die betätigte Vorrichtung vorgesehenes und an einen reversierbaren Antriebsmotor (1) mit einem zugehörigen Motorsteuerkreis gekoppeltes Bewegungsübertragungselement (4), welche Antriebseinheit als programmgesteuerte Einheit ausgestaltet ist, wobei der Motorsteuerkreis einen Mikroprozessor (6) mit zugehörigem re-programmierbaren Speicher (7), der Betriebsparameter für den Antriebsmotor (1) enthält, aufweist, **dadurch gekennzeichnet, dass** der Speicher (7) von aussen über die Stromzufuhrleitern (8, 9) zu der Antriebseinheit mit Hilfe einer externen Programmierungsvorrichtung (16) über eine Schnittstellen-Einheit (17) programmiert und re-programmiert werden kann, welche bei Anschluss an die Stromzufuhrleitern (8, 9) den Mikroprozessor in einen von dem normalen Betriebszustand abweichenden Programmierungszustand bringt, in welchem Zustand Daten zwischen dem Mikroprozessor (6) und der externen Programmierungseinheit (16) ausgetauscht werden können.

2. Antriebseinheit nach Anspruch 1, in der die Umlaufrichtung des Antriebsmotors (1) bei normalem Betriebszustand durch die Polarität einer Gleichspannung auf den Stromzufuhrleitern (8, 9) bestimmt wird, **dadurch gekennzeichnet, dass** der Programmierungszustand einen Polaritätswechsel der Stromzufuhrleitern (8, 9) bei einer Frequenz, die wesentlich höher ist als die Netzfrequenz, umfasst.

3. Antriebseinheit nach Anspruch 1 oder 2, **dadurch gekennzeichnet, dass** der Mikroprozessor (6) zum Aufzeichnen von Daten unter Betrieb der Antriebseinheit vorgesehen ist, und in diesem Programmierungszustand solche Daten und/oder gespeicherte Betriebsparameter aus dem re-programmierbaren Speicher (7) durch mikroprozessor-gesteuerte Verbindung oder Unterbrechung eines an die Stromzufuhrleitern (8, 9) angeschlossenen Belastungswiderstandes (23) auslesen kann.

4. Antriebseinheit nach Anspruch 1, 2 oder 3, **dadurch gekennzeichnet, dass** die gespeicherten Betriebsparameter einen vorausbestimmten maximalen Zufuhrstrom für den Antriebsmotor (1) der Einheit umfassen, dass an den Mikroprozessor (6) Mittel zum Überwachen von Spannung und Strom zum Motor angeschlossen sind, und dass der Mikroprozessor (6) zum Berechnen des laufenden Maximumstroms auf Basis des gemessenen Motorstroms, sowie bei Überschreiten des gespeicherten maximalen Zufuhrstroms zum Starten einer Justierung der Motorspannung zur Reduzierung des Zufuhrstroms auf den gespeicherten maximalen Wert programmiert ist.

5. Antriebseinheit nach Anspruch 4, **dadurch gekennzeichnet, dass** Strom und Motorspannung (1) durch Pulsbreitenmodulation gesteuert sind, und dass der laufende Zufuhrstrom durch Multiplikation des gemessenen Motorstroms mit dem Tastgrad des pulsbreitenmodulierten Signals berechnet wird.

6. Antriebseinheit nach Anspruch 5, **dadurch gekennzeichnet, dass** das Justieren der Motorspannung durch Steuerung des pulsbreitenmodulierten Signals vorgenommen wird.

**Revendications**

1. Unité d'entraînement de dispositifs actionnés électriquement, tels que des portes, des fenêtres, des dispositifs d'écran et analogues, comprenant un boîtier de l'unité d'entraînement (5) conçu pour montage stationnaire et contenant un élément transmetteur de mouvement (4) conçu pour liaison au dispositif actionné et étant en engagement avec un moteur d'entraînement réversible (1) avec un circuit de commande de moteur, unité d'entraînement qui est conçue comme une unité à commande programmée, le circuit de commande de moteur comprenant un microprocesseur (6) avec une mémoire reprogrammable afférente (7) contenant des paramètres d'opération pour le moteur d'entraînement (1), **caractérisée en ce que** la mémoire (7) peut être programmée et reprogrammée de l'extérieur via les conducteurs du courant d'alimentation (8, 9) à l'unité d'entraînement au moyen d'un dispositif extérieur de programmation (16) via une unité d'interface (17) qui, étant reliée aux conducteurs du courant d'alimentation (8, 9), fait entrer le microprocesseur dans un état de programmation différent d'un état normal d'opération et dans lequel des données peuvent être échangées entre le microprocesseur (6) et l'unité extérieure de programmation (16).

2.  Unité d'entraînement selon la revendication 1, où le sens de rotation du moteur d'entraînement (1) dans l'état normal d'opération est défini par la polarité d'une tension en courant continu sur les conducteurs du courant d'alimentation (8, 9), **caractérisée en ce que** l'état de programmation comprend l'inversion de la polarité des conducteurs du courant d'alimentation (8, 9) à une fréquence qui est considérablement plus élevée que les fréquences de tension de réseau.

3.  Unité d'entraînement selon la revendication 1 ou 2, **caractérisée en ce que** le microprocesseur (6) est adapté à enregistrer des données lors de l'opération de l'unité d'entraînement et dans ledit état de programmation à sortir de telles données et/ou des paramètres d'opération enregistrés de la mémoire reprogrammable (7) par connexion et déconnexion commandées par microprocesseur d'une résistance de charge (23) reliée aux conducteurs du courant d'alimentation (8, 9).

4.  Unité d'entraînement selon la revendication 1, 2 ou 3, **caractérisée en ce que** les paramètres d'opération enregistrés comprennent un courant d'alimentation maximal prédéterminé pour le moteur d'entraînement (1) de l'unité, **en ce que** des moyens pour contrôler la tension et le courant pour le moteur sont reliés au microprocesseur (6), et **en ce que** le microprocesseur (6) est programmé à calculer le courant d'alimentation actuel à la base du courant de moteur mesuré et, si la valeur maximale enregistrée est surpassée, à initier un réglage de la tension de moteur pour réduire le courant d'alimentation à la valeur maximale enregistrée.

5.  Unité d'entraînement selon la revendication 4, **caractérisée en ce que** le courant et la tension au moteur (1) sont contrôlés par modulation d'impulsions en durée, et **en ce que** le courant d'alimentation actuel est calculé par multiplication du courant de moteur mesuré par le rapport cyclique du signal modulé d'impulsions en durée.

6.  Unité d'entraînement selon la revendication 5, **caractérisée en ce que** le réglage de la tension de moteur est effectué par contrôle du signal modulé d'impulsions en durée.

FIG. 1

DRIVE UNIT

4

5

8   9

16

17

SUPPLY/
INTERFACE
UNIT

AC

FIG.2

VOLTAGE
REGULATOR

11

23

24

μP

6

8

9

19   18

DIRECTION 1   20
DIRECTION 2   21

FIG.3

FIG.4